# EUROPEAN PATENT APPLICATION

(11) **EP 1 801 639 A1**
(43) Date of publication of application: **27.06.2007**
(21) Application number: 06126300.0
(22) Date of filing: 18.12.2006
(51) Int. Cl.: G02F 1/13357

(54) **LED backlight system for LCD displays**

(30) Priority: 21.12.2005 US 317086
(71) Applicant: Honeywell International, Inc., Morristown, New Jersey 07962 (US)
(72) Inventor: Haim, Victoria P., Glendale, AZ 85308 (US); Haim, Elias S., Glendale, AZ 85308 (US); Cull, Brian D., Andover, MN 55304 (US); Davey, Dennis M., Glendale, AZ 85310 (US); Myers, Karen M., Goodyear, AZ 85338 (US)
(74) Representative: Haley, Stephen

(57) **Abstract**

A LCD display (200) comprises an LCD panel (202) coupled to a backlight system (302). The backlight system (302) comprises a direct view backlight (304) comprising a first plurality of LEDs (303) configured to emit white illumination (320) that, at least in part, provides the required luminosity for the LCD panel (202). The backlight system (302) further comprises an edge view backlight (306) comprising a second plurality of LEDs (308) configured to emit colored illumination (322) that, at least in part, provides the required chromaticity for the LCD panel (202).

## Description

The present invention generally relates to the field of LCD displays, and more particularly to a LED backlight system for LCD displays.

Liquid crystal display (LCD) monitors are replacing traditional cathode ray tube (CRT) monitors in many applications because of their light weight and superior performance. In a typical LCD monitor a backlight is placed behind an LCD panel to illuminate the LCD for viewing by a user. In an exemplary embodiment, a cold cathode fluorescent tube can be used to provide the illumination, although other sources of illumination can also be used.

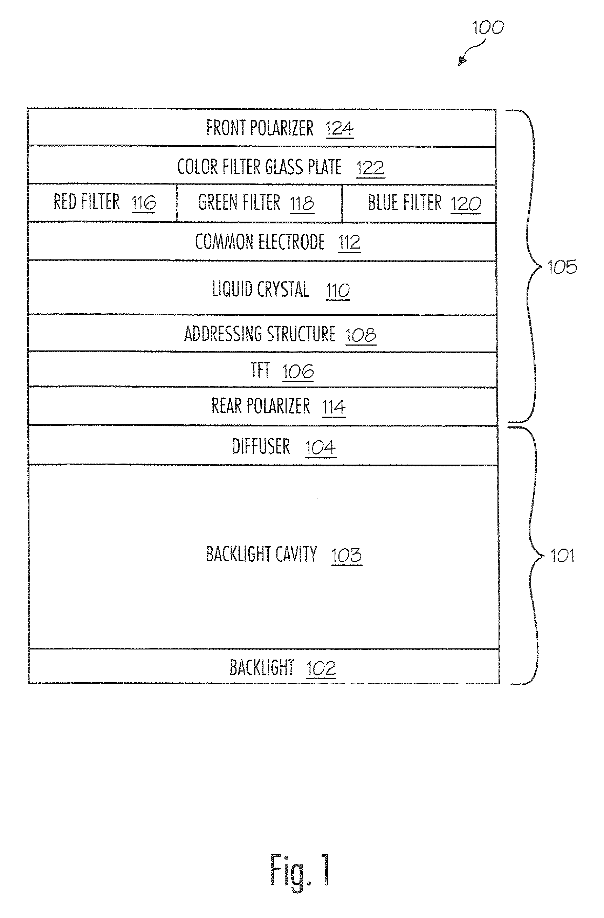

An exemplary pixel 100 of an LCD display is shown in FIG. 1. LCD pixel 100 includes a backlight section 101 and a LCD panel section 105. The backlight section 101 comprises, in one exemplary embodiment, a backlight 102, such as a fluorescent tube set into a backlight cavity 103, and a diffuser 104 that is placed in front of the backlight cavity 103.

The LCD panel section 105 of pixel 100 comprises, in one exemplary embodiment, an addressing structure 108 including thin film transistors (a pixel typically comprises three transistors, which are not shown in FIG. 1) processed onto glass plate 106, the liquid crystal material 110, a common electrode 112 adjacent to the liquid crystal material 110 and coated onto filters 116-120, and a red filter 116, green filter 118 and blue filter 120 processed onto glass plate 122. Front polarizer 124 on the viewer side of color filter plate 122 and a rear polarizer 114 on the outside of the TFT glass plate 106 capture the inner panel structure. In a typical LCD panel, there is an active matrix array of many thousands of pixel structures..

In operation, the perceived color and luminosity of a pixel in its white state is dependent upon the light energy emitted by backlight 102 over the visible wavelengths and the transmission characteristics of the color filter plate. The color can be tuned to a desired chromaticity target by selection of the backlight to match the characteristics of the LCD color filters. As discussed previously, backlight 102 can be comprised of a fluorescent tube. However, light emitting diodes (LEDs) can also be used as will be discussed in detail below. The light from the backlight 102 enters the backlight cavity 103 and exits through the diffuser 104 over the opening. Some light rays will bounce off the walls of backlight cavity 103 prior to passing through the diffuser 104 which spreads the light rays to reduce color and luminance non-uniformities on the display panel produced by the backlights whose radiation patterns are typically non-lambertian. Light exiting diffuser 104 is polarized by rear polarizer 114 and enters liquid crystal 110. The thin film transistors contained in addressing structure 108 are used to govern the amount of charge between different regions of the addressing structure 108 and the electrode 112. As the amount of charge changes, the liquid crystal 110 will act to change the polarization of the light passing through the liquid crystal 110. The light is spectrally filtered by color filters 116-120 and is subsequently repolarized by front polarizer 124. The amount of light exiting the front polarizer 124 depends on the degree of polarization of the light leaving the liquid crystal with respect to the front polarizer 124. Since the addressing structure 108 can control the charge under each color filter 116-120 independently, the red, blue, and green colors each contain a different amount of light, which results in the pixel being perceived to be a particular color.

In the backlight system illustrated in FIG. 1, the backlight is placed directly behind the liquid crystal 110 in what is known as a direct view system. The backlight can also be placed on the edge of a liquid crystal display, in an edge lit configuration. In an edge lit configuration, the light from the backlight propagates through a light guide placed behind the liquid crystal display.

One drawback in the use of fluorescent tubes for backlights is that a relatively large amount of energy is required to operate them. Also, fluorescent tubes can be fragile, a drawback when the LCD displays are used in systems subject to vibrations and shock, such as aeronautical applications. One alternative to the use of fluorescent tubes is the use of light emitting diodes (LEDs). One type of LED suited for use in backlights is the white LED, which emits white light as opposed to the red or other color of typical well-known LEDs. Typically, white LEDs are LEDs that emit a blue light but have a special coating applied such that the LED emits a white light.

White LEDs can be used in both edge lit and direct view applications. A concern in either application is providing a backlight that has both the desired luminosity and chromaticity. Luminosity is a measure of the relative brightness of a LCD display panel. Chromaticity is a measure of the quality of a color as determined by its "purity" and dominant wavelength. Purity in this context is roughly equivalent to the term "saturation" as used in general color theory. The dominant wavelength is roughly equivalent to the property "hue" as used in general color theory. Note that an LCD display is typically only able to display a subset, or color gamut, of a given range of visible color, or color space. The color gamut for a display can be adjusted with the addition of colored light to the backlight in order to achieve a desired chromaticity.

When white LEDs are used in edge lit applications, a decrease in brightness can be experienced because the light must propagate throughout a light guide starting from the edge of the light guide. In many applications, the amount of light provided by edge lit applications with white LEDs may not meet required luminosity requirements for a given application. To alleviate this, either the LCD panel must be made more transmissive to light or more intense edge lighting needs to be used. Either alternative increases cost and design complexity.

When LEDs are used in direct view applications, since each LED is a compact source of light, without proper diffusion, the lighting can be non-uniform. This can especially be a problem when white LEDs are mixed with color LEDs in order to achieve a certain chromaticity requirement. A less transmissive diffuser that has greater hiding power due to better diffusion characteristics could be used to help decrease the non-uniformity of lighting. However, less transmissive diffusers require more LED power and possibly more LEDs to achieve proper luminosity.

Accordingly, it is desirable to provide a LED backlight system for LCD displays. Furthermore, other desirable features and characteristics of the present invention will become apparent from the subsequent detailed description of the invention and the appended claims, taken in conjunction with the accompanying drawings and this background of the invention.

In an exemplary embodiment a backlight system for an LCD panel comprises a direct view backlight comprising a first plurality of LEDs configured to emit direct view illumination that, at least in part, provides the required luminosity for the LCD panel. The backlight system further comprises an edge lit backlight comprising a second plurality of LEDs configured to emit edge lit illumination that, at least in part, provides the required chromaticity for the LCD panel.

In another exemplary embodiment, a method for illuminating an LCD display is disclosed. In a first step, direct view illumination is produced to achieve, at least in part, a luminosity requirement. In a second step, edge lit illumination is produced to achieve, at least in part, a chromaticity requirement. In one exemplary embodiment, the direct view illumination is produced from an array of white LEDs in a direct view backlight and the edge lit illumination is produced from colored LEDs mounted in an edge lit backlight.

In yet another exemplary embodiment, a LCD display comprises an LCD panel coupled to a backlight system. The backlight system comprises a direct view backlight comprising a first plurality of LEDs configured to emit white illumination that, at least in part, provides the required luminosity for the LCD panel. The backlight system further comprises an edge lit backlight comprising a second plurality of LEDs configured to emit colored illumination that, at least in part, provides the required chromaticity for the LCD panel.

### In the Drawings:

The present invention will hereinafter be described in conjunction with the following drawing figures, wherein like numerals denote like elements, and:

FIG. 1 is a cross sectional view of a prior art backlight system;

FIG. 2 is a view of an LCD display in accordance with an exemplary embodiment of the present invention; and

FIG. 3 is a cross sectional view of an LED backlight using a direct view LED system and an edge light color compensating system in accordance with an exemplary embodiment of the present invention.

The following detailed description of the invention is merely exemplary in nature and is not intended to limit the invention or the application and uses of the invention. Furthermore, there is no intention to be bound by any theory presented in the preceding background of the invention or the following detailed description of the invention.

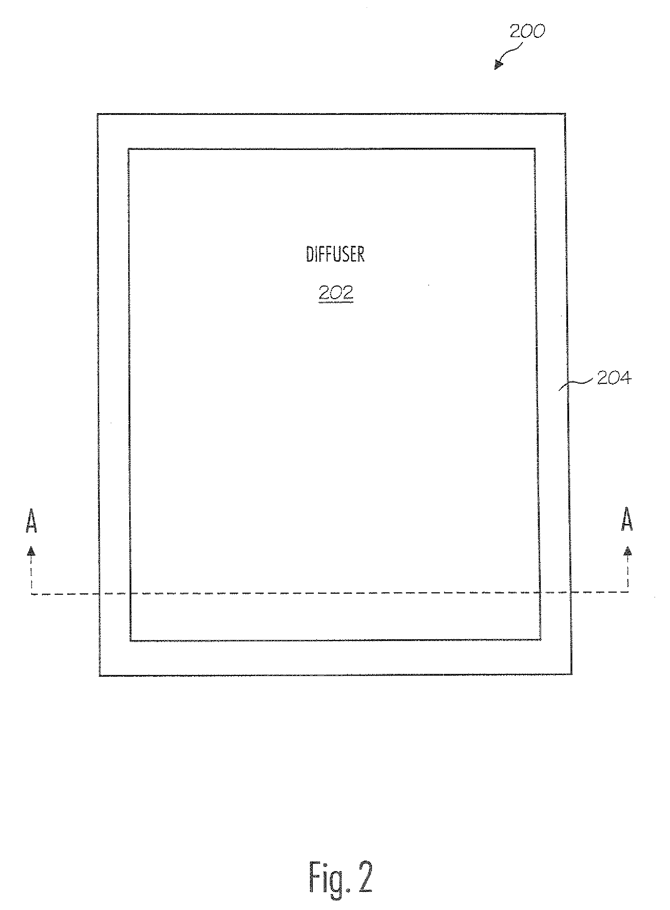

FIG. 2 is a view of an exemplary LCD display 200 comprising an LCD panel 202 contained within a housing 204. The LCD display 200, in one exemplary embodiment, comprises both a direct view backlight and an edge lit backlight. LCD display 200 can be used in any display application, including avionic displays.

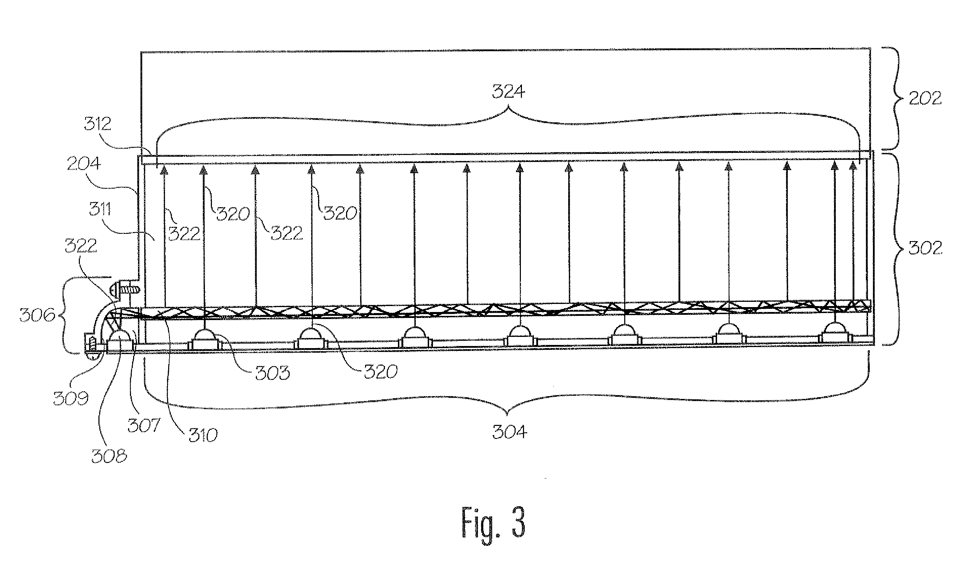

FIG. 3 is a cross sectional view of LCD display 200 taken along line A-A of FIG. 2. The cross sectional view of FIG. 2 illustrates a backlight section 302 coupled to the LCD panel 202. The backlight section 302 comprises a direct view backlight 304 and an edge lit backlight 306, both of which are coupled to the housing 204. A light guide 310 is optically coupled to the edge lit backlight 306. Backlight section 302 further comprises a diffuser 312 coupled to the housing, with an area between the light guide and the diffuser 312 forming a light mixing region 311.

The direct view backlight 304 produces illumination originating from directly behind the LCD panel 202. In one exemplary embodiment, the direct view backlight comprises an array of LEDs 303. In one exemplary embodiment, white LEDs can be used. White LEDs 303, as discussed before, emit white light, which is a combination of light of differing wavelengths. The number of white LEDs 303 used in the direct view backlight can be based on the luminosity requirement for the intended use of the LCD display 200. As an alternative, each white LED can be replaced by a red LED, a green LED and a blue LED whose outputs are merged together using an appropriate light merger to provide the equivalence of a white LED.

Edge lit backlight 306 provides illumination originating along the edge of the light guide 310. The light propagates throughout light guide 310, providing illumination from behind the LCD panel 202. The edge lit backlight 306, in one exemplary embodiment, comprises a plurality of color LEDs 308 mounted in a cavity 307. Cavity 307 includes a reflective surface 309 optically coupling the color LEDs 308 to the light guide 310. The number and color of the color LEDs 308 can be selected based on the chromaticity requirements of the end user. Reflective surface 309, in one embodiment, can be any metallic reflective surface, although any surface capable of reflecting light from a point source of light to a light guide 310 can be used. In one exemplary embodiment, the color LEDs 308 are mounted such that they provide illumination to the light guide 310 without the use of a reflective surface 309.

In operation, LEDs 303 of the direct view backlight 304 provide illumination originating directly behind the LCD panel 202. In one exemplary embodiment, all of the LEDs in the direct view backlight 304 are white LEDs 303 and the number and distribution of the white LEDs is based upon the luminosity requirements of the LCD display 200. The direct view illumination 320 produced by the direct view backlight impinges on the light guide 310 at approximately a ninety degree angle and passes through the light guide 310. Edge lit illumination 322 can be produced using color LEDs, such as red LEDs, in order to assist in providing the correct chromaticity. The edge lit illumination 322 produced by the color LED 308 from the edge lit backlight 306 can reflect from reflective surface 309 into the light guide 310. The edge lit illumination 322 can then propagate through the light guide 310, exiting at one of a plurality of apertures or other light extraction features (not pictured) found at locations on or within the light guide 310.

The direct view illumination 320 and the edge lit illumination 322 mix with each other in mixer region 311. Mixer region 311 helps to ensure the uniformity of a combined illumination 324 comprising the direct view illumination 320 and the edge lit illumination 322, which in turn helps in achieving proper luminosity and chromaticity requirements. The mixed illumination 324 passes through a diffuser, which spreads the mixed illumination 324 for an even backlighting of the LCD panel 202. While the positions and orientations of illumination on 324 and 322 are depicted in Fig 3 in a regular pattern, it is recognized that in general, such illumination will be diffuse in nature, that the apertures or other extraction features may be distributed throughout the light guide, and the light reflected back into the cavity by the diffuser will be further mixed and will contribute to the output of the backlight. It is further recognized that light extraction features on or in the light guide may act to partially diffuse direct view illumination passing through it.

In the exemplary embodiment of FIG. 3, different amounts of luminosity can be achieved via varying the amount and arrangement of white LEDs in the direct view backlight. Different chromaticity requirements can be met by varying the intensity or color of the LEDs 308 of the edge lit backlight. Thus, the use of both a direct view backlight and an edge lit backlight can provide an LCD display that can provide an image with a required luminosity and achieve a desired chromaticity value.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A backlight system for an LCD panel (202) comprising:
a direct view backlight (304) comprising a first plurality of LEDs (303) configured to emit direct view illumination that, at least in part, provides the required luminosity for the LCD panel; and
an edge lit (306) backlight comprising a second plurality of LEDs (308) configured to emit edge view illumination that, at least in part, provides the required chromaticity for the LCD panel (202).

2. The backlight system of claim 1 wherein the first plurality of LEDs (320) are white LEDs arranged in an array to provide direct view illumination propagating from behind the LCD panel (202).

3. The backlight system of claim 1 wherein the second plurality of LEDs (308) are colored LEDs optically coupled to a light guide (310).

4. The backlight system of claim 3 wherein the light guide (310) is configured to propagate edge lit illumination from the colored LEDs through the light guide (310) and to allow the edge view illumination to exit at one or more locations in the light guide (310).

5. The backlight system of claim 1 further comprising a cavity (311) disposed between the direct view light system (302) and the LCD panel (202) for mixing the direct view illumination (320) and the edge view illumination (322).

6. A method for illuminating an LCD display (200) comprising:
producing direct view illumination (320) to achieve, at least in part, a luminosity requirement; and
producing edge lit illumination (322) to achieve, at least in part, a chromaticity requirement.

7. The method of claim 6 wherein the step of producing direct view illumination (320) further comprises producing direct view illumination (320) from an array of white LEDs in a direct view backlight and wherein the step of producing edge lit illumination (320) further comprises producing edge lit illumination (322) from colored LEDs mounted in an edge lit backlight (306).

8. A LCD display (200) for use in an avionic LCD display comprising:
an LCD panel (202), and;
a backlight system (302) coupled to the LCD panel (202), the backlight system (302) comprising:
a direct view backlight (304) comprising a first plurality of LEDs (303) configured to emit illumination (320) of predominantly a first color, and
an edge lit backlight (306) comprising a second plurality of LEDs (308) configured to emit illumination (322) of predominantly a second color, and wherein one of the first color or second color provides, at least in part, the required luminosity for the LCD panel (202), and an other of the first or second color provides, at least in part, the required chromaticity for the LCD panel (202).

9. The LCD display of claim 12 wherein the first plurality of LEDs (303) are white LEDs arranged in an array to provide white illumination propagating from behind the LCD panel (202) and wherein the second plurality of LEDs (308) are colored LEDs optically coupled to a light guide (309).

10. The LCD display of claim 16 further comprising a cavity (311) disposed between the direct view light system (304) and the LCD panel (202) for mixing the white illumination (320) and the colored illumination (322).
